# EUROPÄISCHE PATENTSCHRIFT

(11) **EP 3 665 443 B1**
(45) Veröffentlichungstag und Bekanntmachung des Hinweises auf die Patenterteilung: **26.04.2023**
(21) Anmeldenummer: 18752149.7
(22) Anmeldetag: 07.08.2018
(51) Int. Cl.: G01F 15/00, G01F 1/66

(54) **DURCHFLUSSMESSER UND MESSKANAL**
FLOW METER AND MEASURING CHANNEL
DÉBITMÈTRE ET CANAL DE MESURE

(30) Priorität: 08.08.2017 DE 102017118042
(43) Veröffentlichungstag der Anmeldung: 17.06.2020
(73) Patentinhaber: GWF MessSysteme AG, 6002 Luzern (CH)
(72) Erfinder: HELFENSTEIN, Markus, 6004 Luzern (CH)
(74) Vertreter: Winter, Brandl - Partnerschaft mbB
(86) Internationale Anmeldenummer: PCT/EP2018/071402
(87) Internationale Veröffentlichungsnummer: WO 2019/030229

(56) Entgegenhaltungen:
- WO-A1-2010/069869
- WO-A1-2016/091477
- DE-A1-102011 090 082
- KR-B1- 101 327 182
- US-A1- 2002 124 661
- US-A1- 2015 330 819
- US-B1- 6 189 389
- US-B2- 9 689 727

## Beschreibung

Die Erfindung betrifft einen Durchflussmesser zur Messung des Durchflusses von Fluiden in einer Rohrleitung oder dergleichen gemäß dem Oberbegriff des Patentanspruches 1, sowie einen geeigneten Messkanal.

Bekannt sind Lösungen mit einem Messeinsatz, in dem Ultraschall-Wandler aufgenommen sind. Dieser Messeinsatz wird in eine Ausnehmung eines Rohrstückes/Messkanals eingesetzt, wobei der eigentliche Messkanal auch ein Teil dieses Messeinsatzes sein kann.

Eine derartige Lösung ist beispielsweise in der DE 101 20 355 A1 offenbart, wobei die beiden Ultraschall-Wandler in Strömungsrichtung im Abstand zu einander und an gegenüber liegenden Seiten des Messkanals angeordnet sind.

In der EP 2 306 160 A1 ist ein Durchflussmesser/Durchflusszähler offenbart, bei dem der Messeinsatz sowohl die Ultraschall-Wandler aufnimmt als auch den eigentlichen Messkanal ausbildet. Dabei taucht durch eine von einem Flansch umgegriffene Ausnehmung des Rohrstückes ein den Messkanal ausbildender Profilkörper ein, der die Strömung innerhalb des Messbereiches beeinflusst und an dem zusätzlich Reflektoren für die Messsignale vorgesehen sind.

Eine ähnliche Lösung ist in der EP 2 386 836 B1 gezeigt. Die Strömungsführung innerhalb des Messkanals wird durch einen von der Stirnseite des Gehäuses her einsetzbaren Gehäuseeinsatz bestimmt, der auch Reflektoren für die Ultraschallsignale trägt, so dass der Ultraschall von einem der Ultraschall-Wandler abgegeben und über die Reflektoren zu dem anderen, beispielsweise stromabwärts gelegenen Ultraschall-Wandler reflektiert wird. Selbstverständlich kann die Signalführung auch in umgekehrter Richtung erfolgen.

In der Druckschrift EP 0 890 826 B1 ist ein Durchflussmesser beschrieben, bei dem ebenfalls im Bereich eines Rohrstückes eines Gehäuses ein Messeinsatz an einen tangential verlaufenden Flansch angesetzt wird.

Nachteilig bei derartigen Lösungen ist, dass der Messkanal aus Materialien besteht, die im Fertigungsprozess einen hohen Aufwand erfordern.

Die Druckschrift US 9 689 727 B2 zeigt einen Ultraschall-Durchflussmesser mit einem Messrohr, dessen grundlegender Querschnitt durch Innenhochdruckbeaufschlagung, also mittels Hydroforming, gefertigt ist. In die Wandung des Messrohrs sind nach dem Hydroforming mittels einem Fließbohrverfahren Ausnehmungen eingebracht, in welche Ultraschallsensoren eingesetzt sind. Das Messrohr weist im Bereich seines Ein- und Auslaufs einen größeren Nenn-Durchmesser auf als im Bereich der Ausnehmungen, bzw. der eingesetzten Sensoren. Zudem sind durch das Hydroforming nach innen gewölbte Reflexionszonen ausgebildet. Diese Ausgestaltung wird gemäß der US 9 689 727 B2 erreicht, indem das komplette Messrohr während des Hydroformens aufgeweitet wird. Der Nenn-Durchmesser des Ausgangsmaterials wird dabei so gering gewählt, dass die nach innen weisenden Reflexionsflächen stehen bleiben können.

Demgegenüber liegt der Erfindung die Aufgabe zugrunde, einen Durchflussmesser/Durchflusszähler und einen Messkanal zu schaffen, die produktions- und prozesstechnisch mit geringem Aufwand hergestellt werden können.

Diese Aufgabe wird hinsichtlich eines Durchflussmessers mit den Merkmalen des Patentanspruches 1 und hinsichtlich eines Messkanals mit den Merkmalen des nebengeordneten Anspruchs 11 gelöst.

Vorteilhafte Weiterbildungen der Erfindung sind Gegenstand der Unteransprüche.

Bei einem Durchflussmesser der eingangs beschriebenen Art wird die Aufgabe erfindungsgemäß dadurch gelöst, dass der Messkanal durch Hydroforming hergestellt wird.

Durch den Herstellungsprozess des Hydroformings wird gewährleistet, dass, unabhängig von der erforderlichen Größe des Messkanals, in einem Fertigungsschritt ein verhältnismäßig dünnwandiger Messkanal gefertigt werden kann. Unabhängig ob es sich um einen Messkanal für einen Hauswasserzähler (ab DN15) oder um einen Großwasserzähler (bis DN300) handelt, ist das Fertigungsverfahren anwendbar. Das Hydroforming ist für Messkanale mit unterschiedlichsten Rohraußenwanddicken denkbar. Verschiedene metallische Werkstoffe als Ausgangsmaterial des Rohres lassen ein breites Spektrum an Varianten zu und erfordern keine Nachbearbeitung. Ein weiterer Vorteil gegenüber gegossenen Messkanälen ist, dass eine feiner strukturierte Oberflächenschicht erreicht wird, so dass im Bereich des Messkanals weniger Verwirbelungen auftreten können, die die Messgenauigkeit beeinträchtigen würden. Des Weiteren ist ein hydrogeformtes Profil an unterschiedliche Bedingungen anpassbar, wobei immer das gleiche Ausgangsprofil Anwendung finden kann.

Dabei hat der Messkanal zumindest zwei Ausnehmungen für die Aufnahme einer Messeinrichtung. Diese liegen in Flussrichtung beabstandet zueinander auf einer Seite des Messkanals. Die Ausnehmungen können beispielsweise als Langlöcher ausgebildet sein und im Zuge des Hydroformings eingebracht werden.

Alternativ ist es auch möglich, die Ausnehmungen durch einen sich anschließenden Fertigungsschritt, beispielsweise durch Laserschneiden am hydrogeformten Profil auszubilden.

Bei einer alternativen Lösung wird auf die Ausnehmungen für die Aufnahme einer Messeinrichtung verzichtet, so dass diese durch die Wandung des Messkanals hindurch schallt.

Bei einem bevorzugten Ausführungsbeispiel ist ein Querschnittsprofil des Messkanals längs der Flussrichtung mit einer größeren lichten Weite als quer dazu ausgeführt. Durch Vergrößerung der Abmessung in dieser Richtung wird ein Signalweg und damit die Laufzeit eines Signals der Messeinrichtung gegenüber einem runden Querschnitt vergrößert. Dadurch wird die Messgenauigkeit erhöht.

Beim Hydroformingprozess wird der Rohrdurchmesser in seine oben beschriebene Form gebracht. Um Spannungsspitzen und dadurch Bruchstellen in den meistverformten Bereichen, also den Übergängen, zu vermeiden sind diese konstruktiv verrundet ausgelegt. Dies gilt sowohl für den Bereich vom runden Rohr zum oben genannten Querschnittsprofil, als auch im Bereich der Übergänge zwischen den langen und schmalen Seitenwände des Messkanals.

Durch den Prozess des Hydroformings wird es ermöglicht, den Messkanal in einem Arbeitsschritt auszuformen. Es wird lediglich ein Rohr als Halbzeug benötigt, aus dem der Messkanal einstückig hergestellt wird. Das Rohr kann mit einem runden Querschnitt oder aber auch mit einem rechteckigen oder quadratischen Querschnitt oder in sonstiger Weise ausgebildet sein. Sowohl eine Variante mit Flansch, als auch ohne, ist in einem Fertigungsschritt umsetzbar.
Erfindungsgemäß wird es bevorzugt, wenn die Anschlussflansche in einem sich an das Hydroforming anschließenden Fertigungsschritt ausgebildet werden.

Dabei kann der Anschlussflansch jeweils durch eine Art Aufbördelungsprozess am Messkanal selbst ausgebildet werden oder durch nachträgliches Ansetzen, beispielsweise durch Schweißen, Aufschrumpfen, Kleben der separat gefertigten Anschlussflansche an den Messkanal erfolgen.

Bei einer weiteren Variante des Durchflussmessers ist der Messkanal derart ausgeformt, dass vorzugsweise einseitig eine etwa dachförmige Auswölbung auftritt, wobei die Ausnehmungen für die Sensoren dann im Bereich zweier schräg zueinander angeordneten Schrägwandungen der Auswölbung angeordnet sind.

In einer bevorzugten Ausführungsform sind die Sensoren im Bereich der Auswölbung angeordnet. Ein besonderer Vorteil dieser Ausführung ist, dass die Sensoren dann schräg angeordnet sind, so dass die Signale entsprechend schräg in den Messkanal ein- und ausgekoppelt werden. Somit ist neben der Positionierung auch die Ausrichtung der Sensoren gegenüber eines geraden Messkanals ohne Wölbung erheblich erleichtert.

Erfindungsgemäß wird beim Hydroforming ausschließlich der Bereich des Messkanals verformt, der sich nicht im Bereich eines Einlaufs und eines Auslaufs befindet. Dadurch ist gewährleistet, dass diese Bereiche weiterhin wie das Ausgangsprofil, beispielsweise als Rundprofil ausgebildet sind und dass nur der dafür vorgesehene Abschnitt, zwischen den Sensoren, mit einer in Mess-/Einkoppel-/Auskoppelrichtung größeren Höhe als Breite, zur Verbesserung der Messgenauigkeit, umgeformt ist. Erfindungsgemäß ist es bevorzugt, wenn das etwa rechteckige Profil liegend angeordnet ist, so dass die geringere Breite in Vertikalrichtung (Schwerkraftrichtung) verläuft.

Dem entsprechend wird erfindungsgemäß ein Messkanal für einen Durchflussmesser durch Hydroforming hergestellt.

Bevorzugte Ausführungsbeispiele der Erfindung werden im Folgenden anhand schematischer Zeichnungen näher erläutert. Es zeigen:
Figur 1 einen Grundaufbau eines Durchflussmessers
Figur 2 einen Messkanal in der erfindungsgemäßen Ausführungsform;
Figur 3 weitere Ausführungsbeispiele von Messkanälen

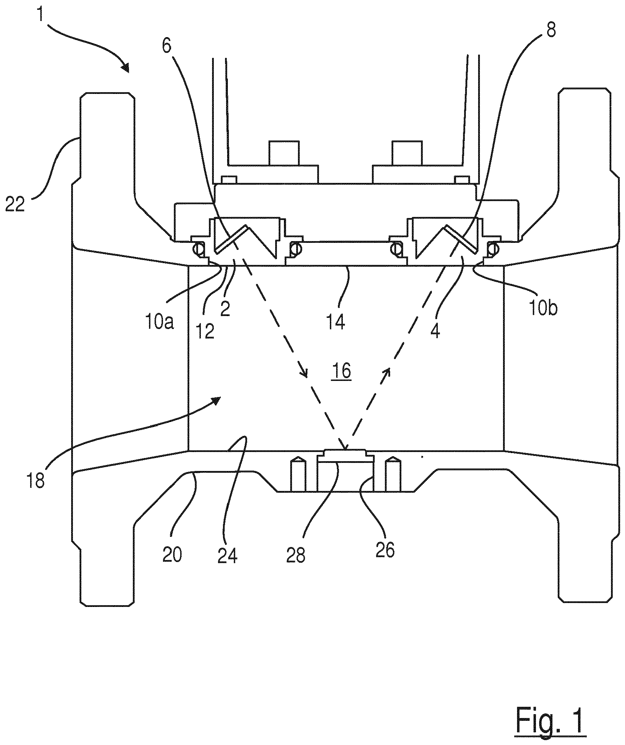

Figur 1 zeigt einen Längsschnitt eines Durchflussmessers 1. Man erkennt in dieser Darstellung zwei Koppelstücke 2, 4, mit zwei Sensoren 6 bzw. 8. Diese sind jeweils in zwei Ausnehmungen 10a, 10b eingesetzt. Die Koppelflächen 12 verlaufen bündig zur Umfangswandung (Querwandung 14 und angrenzende Bereiche einer Seitenwandungen 16) eines Messkanals 18, der bei diesem Ausführungsbeispiel durch ein Rohrstück 20 ausgebildet ist. Ein Teil eines Flansches 22 bildet somit die Querwandung 14 aus. Eine gegenüberliegende Querwandung 24 ist bei diesem Ausführungsbeispiel mit einer nach außen hin offenen Tasche 26 ausgebildet, in die ein Reflektor 28 eingesetzt ist.

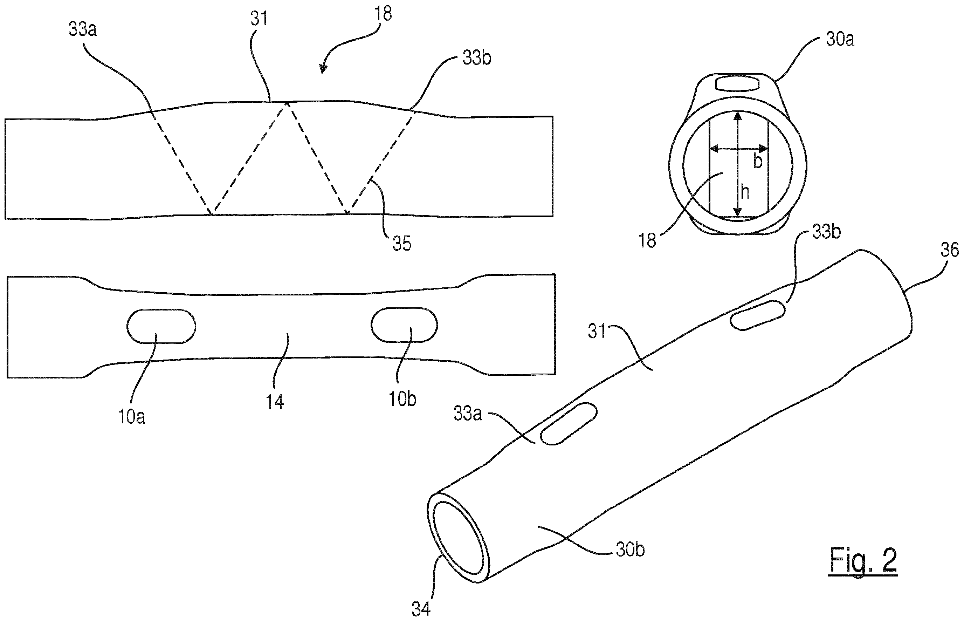

In Figur 2 ist ein Messkanal 18, hier ohne Flansch, gezeigt, der durch Hydroforming hergestellt wurde. Deutlich zu sehen sind die beiden Ausnehmungen 10a, 10b. Oben rechts in Figur 1 ist ein Querschnitt des Messkanals gezeigt, anhand dessen zu erkennen ist, dass im Durchflussbereich des Messkanals 18 die lichte Höhe h größer ist als die Breite b.

Bei dem in Figur 2 dargestellten Ausführungsbeispiel ist das Querschnittsprofil (oben rechts) so dargestellt, dass die Höhe h in der Vertikalen (Schwerkraftrichtung) verläuft, so dass das Rechteckprofil sozusagen stehend angeordnet ist. Bei der Feldinstallation wird es jedoch bevorzugt, wenn das Profil "liegend" installiert ist, so dass die geringere Breite b in Vertikalrichtung angeordnet ist. Diese liegende Gebrauchslage bietet den Vorteil, dass sich im Bereich der Ausnehmungen 10a keine Luftansammlungen einstellen können, die zu einer fehlerhaften Messung führen.

Die Übergänge 30a im Bereich des Messkanals und die Übergänge 30b im Übergangsbereich vom Ausgangsprofil zum Bereich des Messkanals 18 sind als Verrundung ausgeführt. Das Rohteil als Ausgangsprofil ist bei jedem Messkanal beispielsweise ein Rundprofil. Anstelle des Rundprofils kann selbstverständlich auch ein anderes Rohrprofil, beispielsweise ein rechteckiges oder ein quadratisches Profil oder eine sonstige Querschnittsform verwendet werden. Als Materialien sind alle hydroformbaren Werkstoffe denkbar, also Stahl, Edelstahl, Sonderlegierungen, Aluminium, Kupfer, Messing, oder auch Titan. Durch das Hydroforming wird das Ausgangsprofil, beispielsweise ein Rundprofil (Rohr) in die Form des Messkanals 18 umgeformt, wobei es im Bereich des Einlaufs 34 und des Auslaufs 36 weiterhin ein Rundprofil (Ausgangsprofil) bleibt. Der Messkanal 18 kann sowohl mit, als auch ohne Flansch 22 produziert werden. Durch das Hydroforming wird, auf Grund der sehr geringen Spannung und Rückfederung, eine sehr hohe Maßhaltigkeit erreicht.

Wie vorstehend erläutert, können die Flansche 22 auch durch einen Nachfolgeprozess, beispielsweise durch einen Aufbördelungsprozess, ausgebildet werden. Alternativ können die Flansche auch durch Schweißen, Aufschrumpfen, Kleben oder in sonstiger Weise mit dem durch Hydroforming ausgebildeten Messkanal verbunden werden.

Ebenfalls ersichtlich ist die besondere Form des Messkanals 18. Im Bereich einer Auswölbung 31 sind die Ausnehmungen 10a, 10b ausgebildet. Diese Auswölbung 31 kann die Positionierung und Ausrichtung der Sensoren 6, 8 und der Koppelstücke 2, 4, im Gegensatz zu einem Messkanal 18 ohne Auswölbung 31, deutlich erleichtern. Durch die hohe Maßhaltigkeit eines hydrogeformten Messkanals 18 wird der Effekt der vereinfachten Ausrichtung noch verstärkt. Durch die Form der Auswölbung 31 sind die Ausnehmungen 10 auf Schrägwandungen 33 angeordnet. Die derart angeordneten Ausnehmungen 10 ermöglichen es, dass die Signale der Sensoren 6, 8 dann in einem angepassten Winkel in den Messkanal 18 ein- und auskoppeln können.

Abhängig vom Grad der Anstellung der Schrägwandungen 33 kann eine andere Reflektoranordnung als beim oben beschriebenen Ausführungsbeispiel angewendet werden. Hierbei wird anstelle nur eines Reflektors 18 auf der den Sensoren 6, 8 gegenüberliegenden Querwandung 24, eine Reflektoranordnung mit drei Reflektoren installiert. Zwei der Reflektoren 18 sind auf der Querwandung 24 ausgebildet und ein Reflektor 18 zwischen den Sensoren 6, 8 im Bereich der Auswölbung 31, so dass ein W-förmiger Signalpfad 35 ausgebildet ist, wie in Fig. 2 angedeutet (Reflektoren sind nicht abgebildet). Bei einer entsprechend mit steileren Schrägwandungen 33 ausgeführten Variante des Messkanals 18, ist eine Reflektoranordnung nach Fig. 1 umsetzbar.

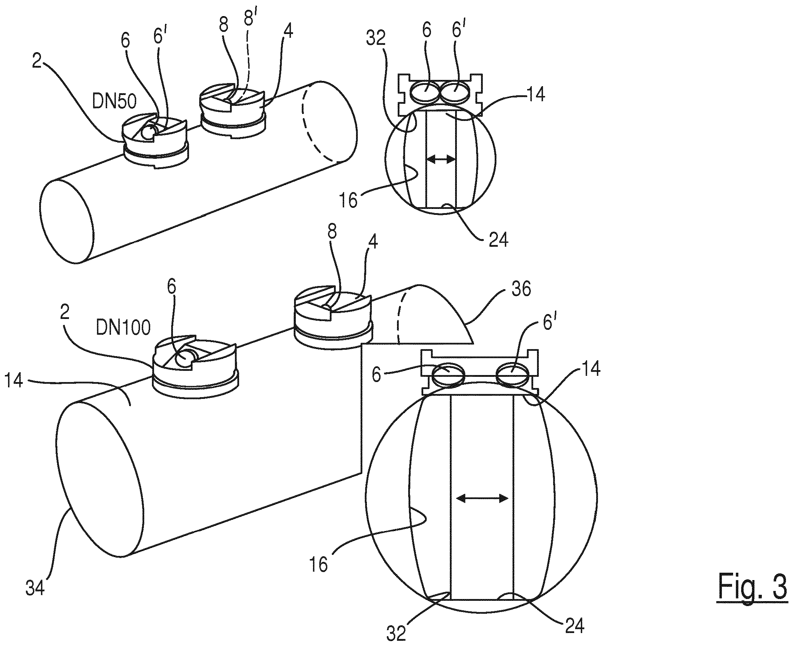

Die Darstellungen in Figur 3 zeigen zwei Ausführungsbeispiele einesMesskanals, wobei es sich um ein Ausführungsbeispiel der Dimension DN50 und eines der Dimension DN100 handelt. Bei dem dargestellten Ausführungsbeispielen sind in jedes Koppelstück 2, 4 jeweils zwei paarweise zueinander angeordnete Sensoren 6, 6' bzw. 8, 8' angeordnet, so dass eine parallele Ein- und Auskopplung von Messsignalen erfolgt.

Ein Unterschied zwischen den beiden Ausführungsbeispielen gemäß Figur 3 besteht darin, dass bei der Nennweite DN50 die Koppelstücke 2, 4 aufgrund des relativ kleinen Messkanalquerschnittes einen vergleichsweise großen Teil der Messkanalaußenwandung umgreifen, wobei der Abstand der Sensoren 6, 6' bzw. 8, 8' bei der geringeren Nennweite geringer als bei der großen Nennweite DN100 ist, so dass die Messsignale in einem größeren Abstand zueinander ein- bzw. ausgekoppelt werden.

Bei dem Durchflussmesser mit größerer Nennweite DN100 liegen die Koppelstücke 2, 4 vollständig im Bereich der Querwandung 14.

Die Koppelstücke 2, 4 mit den Sensoren 6, 6', 8, 8' sind in den dafür vorgesehenen Ausnehmungen 10 eingesetzt. Die Ausnehmungen 10 können ebenfalls materialunabhängig, in einem Fertigungsschritt beim Hydroforming, aus dem Ausgansprofil erzeugt werden. Bei einem bevorzugten Ausführungsbeispiel werden die Ausnehmungen 10 jedoch erst nach dem Hydroforming, beispielsweise durch Laserschneiden oder in sonstiger Weise ausgebildet. In der Darstellung gemäß Figur 1 ist auch ersichtlich, dass die Übergänge 32 von den Querwandungen 14, 24 zu den Seitenwandungen 16, im Inneren des Messkanals 18, ebenfalls als Verrundungen ausgebildet sind.

Offenbart ist ein Durchflussmesser mit zumindest zwei zu einander beabstandeten Mess-Sensoren, vorzugsweise Ultraschall-Sensoren, wobei die Ein- und Auskopplung der Messsignale in bzw. aus einem Fluid über ein Koppelstück erfolgt, das in eine Umfangswandung eines durch Hydroforming hergestellten Messkanals eingesetzt ist. Alternativ kann die Ein- und Auskopplung der Messsignale auch durch eine Wandung des Messkanals hindurch erfolgen.

### Bezugszeichenliste:

- 1: Durchflussmesser
- 2: Koppelstück
- 4: Koppelstück
- 6, 6': Sensor
- 8, 8': Sensor
- 10: Ausnehmung
- 12: Koppelfläche
- 14: Querwandung
- 16: Seitenwandung
- 18: Messkanal
- 20: Rohrstück
- 22: Flansch
- 24: Querwandung
- 26: Tasche
- 28: Reflektor
- 30: Übergang
- 31: Auswölbung
- 32: Übergang
- 33: Schrägwandung
- 34: Einlauf
- 35: Signalpfad
- 36: Auslauf

## Patentansprüche

1. Durchflussmesser, wobei ein Querschnittsprofil eines Messkanals (18) durch Hydroforming ausgebildet ist, wobei der Messkanal (18) Ausnehmungen (10a, 10b) für in Koppelstücke (2, 4) aufgenommene Sensoren (6, 8) hat, **dadurch gekennzeichnet, dass** ausschließlich ein Bereich des Messkanals (18) hydroverformt ist, der sich nicht im Bereich eines Einlaufs (34) und eines Auslaufs (36) befindet, sodass das Querschnittsprofil im Bereich des Einlaufs (34) und des Auslaufs (36) ein Ausgangsprofil ist.

2. Durchflussmesser nach Anspruch 1, **dadurch gekennzeichnet, dass** der Messkanal (18) im Bereich der Ausnehmungen (10a, 10b) einen nicht runden Querschnitt hat.

3. Durchflussmesser nach Anspruch 2, **dadurch gekennzeichnet, dass** der Querschnitt etwa in Ein-/Auskoppelrichtung von Messsignalen eine größere Höhe (h) als Breite (b) aufweist.

4. Durchflussmesser nach Anspruch 3, **dadurch gekennzeichnet, dass** in der Gebrauchslage der Querschnitt liegend angeordnet ist, so dass die geringere Breite (b) in etwa in Schwerkraftrichtung angeordnet ist.

5. Durchflussmesser nach einem der vorangegangenen Ansprüche, **dadurch gekennzeichnet, dass** die Übergänge (30a, 30b, 32) des Messkanals (18) im Bereich der Verformung verrundet sind.

6. Durchflussmesser nach einem der vorangegangenen Ansprüche, **dadurch gekennzeichnet, dass** der Messkanal einstückig und mit oder ohne Flansch ausgebildet ist.

7. Durchflussmesser nach einem der vorhergehenden Ansprüche, **dadurch gekennzeichnet, dass** beim Hydroforming eine Auswölbung im Bereich der Ausnehmungen (10a, 10b) hergestellt wird.

8. Durchflussmesser nach Anspruch 7, **dadurch gekennzeichnet, dass** die Sensoren im Bereich der Auswölbung angeordnet sind.

9. Durchflussmesser nach einem der vorangegangenen Ansprüche, **dadurch gekennzeichnet, dass** das Querschnittsprofil im Bereich des Einlaufs (34) und des Auslaufs (36) ein Rundprofil ist.

10. Durchflussmesser nach einem der Patentansprüche 1, 3, 4, 5, 8, **dadurch gekennzeichnet, dass** Sensoren (6, 8) durch eine Wandung des Messkanals hindurch schallen.

11. Messkanal für einen Durchflussmesser nach einem der Ansprüche 1 bis 10, **dadurch gekennzeichnet, dass** der Messkanal durch Hydroforming hergestellt wird.

## Claims

1. Flow meter, wherein a cross-section profile of a measuring channel (18) is formed by hydroforming, wherein the measuring channel (18) has recesses (10a, 10b) for sensors (6, 8) accommodated in coupling members (2, 4), **characterized in that** only a region of the measuring channel (18) is hydroformed which is not located in the region of an inlet (34) and an outlet (36), so that the cross-section profile in the region of the inlet (34) and the outlet (36) is an initial profile.

2. Flow meter according to claim 1, **characterized in that** the measuring channel (18) has a non-round cross-section in the region of the recesses (10a, 10b).

3. Flow meter according to claim 2, **characterized in that** the cross-section has a greater height (h) than width (b) approximately in the in-coupling/out-coupling direction of measuring signals.

4. Flow meter according to claim 3, **characterized in that** in the position of use, the cross-section is arranged horizontally so that the smaller width (b) is arranged approximately in the direction of gravity.

5. Flow meter according to one of the preceding claims, **characterized in that** the transition sections (30a, 30b, 32) of the measuring channel (18) are rounded in the area of the deformation.

6. Flow meter according to one of the preceding claims, **characterized in that** the measuring channel is formed in one piece and with or without flange.

7. Flow meter according to one of the preceding claims, **characterized in that** during hydroforming a bulging is produced in the area of the recesses (10a, 10b).

8. Flow meter according to claim 7, **characterized in that** the sensors are arranged in the area of the bulging.

9. Flow meter according to one of the preceding claims, **characterized in that** the cross-section profile in the area of the inlet (34) and the outlet (36) is the basic profile, preferably a round profile.

10. Flow meter according to one of claims 1, 3, 4, 5, 8, **characterized in that** sensors (6, 8) sound through a wall of the measuring channel.

11. Measuring channel for a flow meter according to one of the claims 1 to 10, **characterized in that** the measuring channel is produced by hydroforming.

## Revendications

1. Débitmètre, dans lequel un profil de section transversale d'un canal de mesure (18) est formé par hydroformage, dans lequel le canal de mesure (18) présente des évidements (10a, 10b) pour des capteurs (6, 8) logés dans des pièces de couplage (2, 4), **caractérisé en ce qu'**une seule zone du canal de mesure (18) est hydroformée, qui ne se trouve pas dans la zone d'une entrée (34) et d'une sortie (36), de sorte que le profil de section transversale dans la zone de l'entrée (34) et de la sortie (36) est un profil initial.

2. Débitmètre selon la revendication 1, **caractérisé en ce que** le canal de mesure (18) présente une section transversale non ronde dans la zone des évidements (10a, 10b).

3. Débitmètre selon la revendication 2, **caractérisé en ce que** la section transversale présente une hauteur (h) supérieure à la largeur (b) sensiblement dans la direction de couplage/découplage de signaux de mesure.

4. Débitmètre selon la revendication 3, **caractérisé en ce que** dans la position d'utilisation, la section transversale est agencée horizontalement, de sorte que la plus petite largeur (b) est agencée approximativement dans la direction de la gravité.

5. Débitmètre selon l'une quelconque des revendications précédentes, **caractérisé en ce que** les transitions (30a, 30b, 32) du canal de mesure (18) sont arrondies dans la zone de la déformation.

6. Débitmètre selon l'une quelconque des revendications précédentes, **caractérisé en ce que** le canal de mesure est conçu d'un seul tenant et avec ou sans bride.

7. Débitmètre selon l'une quelconque des revendications précédentes, **caractérisé en ce qu'**un renflement est produit dans la zone des évidements (10a, 10b) lors de l'hydroformage.

8. Débitmètre selon la revendication 7, **caractérisé en ce que** les capteurs sont agencés dans la zone du renflement.

9. Débitmètre selon l'une quelconque des revendications précédentes, **caractérisé en ce que** le profil de section transversale dans la zone de l'entrée (34) et de la sortie (36) est un profil rond.

10. Débitmètre selon l'une quelconque des revendications 1, 3, 4, 5, 8, **caractérisé en ce que** des capteurs (6, 8) émettent un son à travers une paroi du canal de mesure.

11. Canal de mesure pour un débitmètre selon l'une quelconque des revendications 1 à 10, **caractérisé en ce que** le canal de mesure est réalisé par hydroformage.
